# FASCICULE DE BREVET EUROPEEN

(11) **EP 0 810 146 B1**
(45) Date de publication et mention de la délivrance du brevet: **28.03.2001**
(21) Numéro de dépôt: 97401084.5
(22) Date de dépôt: 15.05.1997
(51) Int. Cl.: B62D 29/04

(54) **Procédé de fabrication de coque de véhicule**
Verfahren zum Herstellen der Rohbaustruktur eines Kraftfahrzeuges
Method of producing a shell structure of a vehicule

(30) Priorité: 28.05.1996 FR 9606551
(43) Date de publication de la demande: 03.12.1997
(73) Titulaire: Automaxi Industries, 35400 Saint-Malo (FR)
(72) Inventeur: Ravier, Jean-Marie, 35400 Saint Malo (FR)
(74) Mandataire: Keib, Gérard

(56) Documents cités:
- EP-A- 0 028 297
- WO-A-94/26576
- WO-A-96/12613
- FR-A- 2 213 844
- FR-A- 2 505 726
- FR-A- 2 698 601

## Description

L'invention concerne les véhicules et notamment les véhicules susceptibles d'êtres conduits sans permis, connus dans la technique sous le nom de V.S.P.

Les véhicules du type V.S.P. représentent un marché relativement étroit qui ne justifie pas la mise en oeuvre, pour leur construction, d'installations aussi onéreuses que celles nécessaires pour la construction des éléments des véhicules classiques (installations d'emboutissage, d'injection plastique etc.).

C'est pourquoi on utilise habituellement des techniques n'impliquant pas un investissement aussi élevé, et on réalise un certain nombre de leurs éléments en stratifié de polyester, ou mieux, par une technique de thermoformage. Malheureusement, les coûts unitaires sont en contrepartie plus élevés.

Le document FR-A-2 505 726 décrit un procédé de fabrication de coque de véhicule moulée en un seul bloc, et s'intéresse particulièrement aux imperfections au niveau des rebords liées au moulage en un seul bloc.

Le document WO-A-94 26576 divulgue l'usage de matériaux thermoplastiques appliqués par la technique de rotomoulage pour la réalisation de coques de véhicules.

L'invention a pour but de remédier à ces inconvénients, et concerne à cet effet un procédé de fabrication de coque de véhicule, caractérisé en ce que l'on tapisse de matière synthétique sous forme de poudre la paroi intérieure d'un moule en plusieurs parties conformée en coque de véhicule munie d'éléments de structure pris dans un groupe constitué par des éléments de structure externes, des éléments de structure internes et des éléments de compartiment moteur, en entraînant ce moule en rotation à chaud (rotomoulage) à l'intérieur d'un four, puis on abaisse la température du moule et de son contenu, ensuite on démoule la coque multifonctions obtenue, enfin on transfère la coque à un conformateur, et on soumet au moins une partie de cette coque à un soufflage pour lui faire épouser la forme du conformateur dans la région correspondante de celui-ci.

Grâce au fait que l'on réalise en une seule pièce la coque et des éléments du véhicule tels que des pare-chocs et/ou des ossatures de sièges etc., le coût relativement élevé, dû au fait que les installations sont de dimensions importantes et que les moules également de grandes dimensions sont relativement difficiles à fabriquer, est compensé par les économies de fabrication et de montage des équipements en question.

De plus, tandis que dans le procédé de fabrication classique par thermoformage, la matière est plus étirée (donc moins épaisse) dans les angles de la pièce, dans le procédé de fabrication par rotomoulage, la matière s'accumule dans les angles, c'est-à-dire aux emplacements qui subissent les contraintes les plus importantes, et la solidité est notablement accrue.

Également, l'intégration des éléments tels que des pare-chocs ou des ossatures de sièges constitue des reliefs assurant la rigidification de la coque.

D'autres caractéristiques et avantages de l'invention ressortiront de la description qui va suivre, de formes et de modes de réalisation de l'invention à titres d'exemples non limitatifs.

Le véhicule selon l'invention comporte une coque réalisée à partir d'une matière synthétique, par exemple du polyéthylène de préférence de haute densité. On introduit cette matière synthétique, sous forme de poudre, dans un moule en plusieurs parties dont certaines peuvent être amovibles, ouvert, que l'on referme ensuite et que l'on entraîne autour de deux axes perpendiculaires, au moyen d'un montage à la Cardan, en rotation à l'intérieur d'un four. On chauffe le four à une température telle que la poudre envoyée par la force centrifuge contre la paroi interne du moule soit fondue par contact sur celle-ci de manière à la tapisser (rotomoulage). Quand cette paroi interne est correctement tapissée, on sort le moule du four et on le transfère dans une enceinte de refroidissement où circule un gaz froid (généralement de l'air) ou/et dans laquelle on le soumet à une aspersion. Puis on ouvre le moule et on procède au démoulage, avant refroidissement total, on transfère la pièce au conformateur, lequel est constitué en plusieurs parties, et on effectue un soufflage pour faire épouser à au moins une partie de la pièce, la paroi interne de la région correspondante du conformateur.

La coque rotomoulée, ayant comme on l'a vu une grande rigidité, est réalisée sous la forme d'une coque autoporteuse. Le châssis distinct de la coque peut donc être réduit à un élément reliant les trains avant et arrière du véhicule ; il est même envisageable de s'affranchir d'une telle liaison train avant-train arrière. L'économie sur le châssis est donc considérable, car, dans les V.S.P. traditionnels, le châssis est un treillis tubulaire qui est destiné à supporter chaque élément de carrosserie.

Comme, de plus, la matière rotomoulée (ici le polyéthylène haute densité) a de bien meilleures caractéristiques de résistance au choc que les matières habituellement thermoformées (par exemple acrylonitrile de butadiène et de styrène, connu sous le nom d'ABS) en particulier par grand froid, on a la possibilité d'intégrer en une seule pièce avec la coque, de nombreux éléments de structure externes, internes, ou de compartiment moteur, par exemple les pare-chocs, les alvéoles pour les organes d'éclairage et pour les organes de signalisation, les ossatures de sièges (que l'on peut éventuellement revêtir ensuite si nécessaire), les alvéoles pour les instruments de bord et notamment le logement du combiné compteur de vitesse, des alvéoles de rangement, le logement du frein à main, un bac à batterie, un logement de réservoir d'huile, un logement de réservoir de carburant, etc.

Cette technique permet d'aboutir à un coût d'investissement raisonnable (une pièce unique remplace une multitude de pièces distinctes), à un coût unitaire beaucoup plus faible de la partie coque, et à un coût de montage des équipements séparés et des accessoires également réduit.

En effet, par un choix judicieux des formes données à la coque, la fixation des équipements et des accessoires peut être également obtenue de manière très économique, notamment la fixation des phares, des feux clignotants, des moteurs d'essuie-glace, etc.

Egalement, il est possible de disposer des inserts de fixation de pièces mécaniques, à l'intérieur du moule, puis d'effectuer le rotomoulage de telle sorte que ces inserts soient noyés dans la masse sauf naturellement du côté utilisation ; on peut ainsi lier à la coque des inserts de fixation d'arceau de sécurité, de fixation d'éléments de châssis (des logements d'amortisseurs de vibrations connus sous le nom de "silent-blocs" peuvent ainsi être prévus de rotomoulage), de fixation de pare-brise et autres glaces, de fixation d'articulations de capots, etc.

Un tunnel de passage pour l'arceau de rigidification peut être réalisé dans la coque en mettant en oeuvre au moins une partie de moule dont une région présente une forme en cheminée.

Il est de plus possible de prévoir des inserts ou des doigts en chicane pour la fixation de câbles et de gaines notamment électriques, et également pour la fixation de petits équipements ou accessoires divers tels qu'avertisseur sonore, boîtiers de ceinture de sécurité et autres ; la prise en compte des variations de retrait passe par la réalisation de lumières de fixation de forme appropriée, par exemple oblongues plutôt que circulaires.

Enfin, on peut également introduire dans le moule des inserts de rigidification aux emplacements désirés, ou donner au moule une forme visant à créer une coque munie de nervures de rigidification.

Bien entendu, l'invention n'est pas limitée aux formes et aux modes de réalisation ci-dessus décrits, et on pourra en prévoir d'autres formes et d'autres modes, et par exemple choisir une autre matière synthétique, par exemple du polycarbonate, ou "mousser" l'intérieur de la coque par exemple entre les deux peaux de celle-ci pour augmenter encore sa résistance et éviter l'adjonction de tout élément de châssis ; de même, on pourra aisément créer entre les deux peaux des ponts de matière rigidifiant la coque, en rapprochant des parties de moule se faisant vis-à-vis à faible distance l'une de l'autre de telle sorte que la matière synthétique tapissant ces deux parties s'agglomère localement.

Un perfectionnement de ce procédé peut également consister à créer, sur une surface de la coque que l'on veut munir d'un capot amovible, une protubérance vers l'extérieur reliée à cette surface par une paroi périphérique légèrement en contre-dépouille (ce qui ne présente pas d'inconvénient si le moule est en plusieurs pièces judicieusement réparties) ; après séparation des moules et refroidissement, une bande de matière est découpée tout le long de la paroi périphérique, et est ainsi créée dans la surface une ouverture entourée d'une paroi légèrement inclinée, susceptible d'être fermée par la partie de surface séparée de la coque et elle-même entourée d'une paroi légèrement inclinée, jouant le rôle de capot susceptible d'être fixé à la coque par tout moyen approprié, les deux parois jouant le rôle de chicane d'étanchéité.

De manière analogue, un logement de pédalier en deux pièces avec la coque peut être obtenu en créant une protubérance vers l'intérieur de la coque, en découpant la paroi périphérique de cette protubérance, en retournant le capot obtenu face pour face pour lui faire traverser la paroi de la coque depuis l'intérieur de celle-ci et le faire venir en protubérance vers l'extérieur, et en fixant ce logement par tout moyen.

Naturellement, l'invention peut être appliquée avantageusement non seulement aux véhicules sans permis, mais également à d'autres véhicules qui ne sont pas appelés à être fabriqués en grande série.

## Revendications

1. Procédé de fabrication de coque de véhicule, caractérisé en ce que l'on tapisse de matière synthétique sous forme de poudre la paroi -intérieure d'un moule en plusieurs parties conformée en coque de véhicule munie d'éléments de structure pris dans un groupe constitué par des éléments de structure externes, des éléments de structure internes et des éléments de compartiment moteur, en entraînant ce moule en rotation à chaud, à l'intérieur d'un four, puis on abaisse la température du moule et de son contenu, ensuite on démoule la coque multifonctions obtenue, enfin on transfère la coque à un conformateur, et on soumet au moins une partie de cette coque à un soufflage pour lui faire épouser la forme du conformateur dans la région correspondante de celui-ci.

2. Procédé de fabrication de coque de véhicule selon la revendication 1, caractérisé en ce que, avant le moulage par rotation, on dispose, dans le moule, des inserts de fixation de pièces mécaniques prises dans un groupe constitué par un pare-brise, des organes d'éclairage, un arceau de sécurité, des éléments de châssis, des articulations de capot, des câbles, des gaines, un avertisseur sonore, et des ceintures de sécurité.

3. Procédé de fabrication de coque de véhicule selon la revendication 1 ou 2, caractérisé en ce que deux parties de moule se faisant vis-à-vis sont disposées à une distance suffisamment faible l'une de l'autre pour constituer des ponts de matière entre les deux peaux correspondantes de la coque afin d'augmenter la rigidité de la coque.

4. Procédé de fabrication de coque de véhicule selon l'une quelconque des revendications précédentes, caractérisé en ce que l'on créée sur une surface de la coque, une protubérance reliée à cette surface par une paroi périphérique, et après refroidissement, on découpe la paroi périphérique pour constituer un capot adapté à être fixé à ladite surface pour en obturer l'ouverture.

5. Procédé de fabrication de coque de véhicule selon l'une quelconque des revendications précédentes, caractérisé en ce que l'on met en oeuvre au moins une partie de moule dont une région présente une forme en cheminée.

6. Procédé de fabrication de coque de véhicule selon l'une quelconque des revendications précédentes, caractérisé en ce que l'on utilise comme matière synthétique du polyéthylène, notamment du polyéthylène haute densité.

## Claims

1. Process for manufacturing a vehicle shell structure, characterised in that the inside wall of a mould, made of several parts and configured as a vehicle shell structure equipped with structural elements taken from a group constituted by outer structural elements, inner structural elements and engine compartment elements, is lined with synthetic material in powder form by hot-rotating this mould within a furnace, then by lowering the temperature of the mould and of the content thereof, by demoulding afterwards the multifunction shell structure obtained, finally by transferring the shell structure to a cooling jig, and by blow-moulding at least part of this shell structure into the shape of the cooling jig in the corresponding area thereof.

2. Process for manufacturing a vehicle shell structure according to Claim 1, characterised in that attachment inserts of mechanical parts taken from a group constituted by a windscreen, lighting units, a roll bar, chassis elements, engine bonnet hinges, cables, sheaths, a horn, and safety belts are disposed in the mould prior to rotational moulding.

3. Process for manufacturing a vehicle shell structure according to Claim 1 or 2, characterised in that two mould parts facing each other are disposed apart from each other at a distance sufficiently small to constitute bridges of material between the two corresponding skins of the shell structure so as to increase the rigidity of the shell structure.

4. Process for manufacturing a vehicle shell structure according to any one of the preceding Claims, characterised in that, on one surface of the shell structure, a protrusion linked to this surface by a peripheral wall is formed and in that the peripheral wall is cut, after cooling, so as to constitute a bonnet adapted to be attached to said surface in order to seal the opening thereof.

5. Process for manufacturing a vehicle shell structure according to any one of the preceding Claims, characterised in that at least one mould part, one region of which has a chimney-like shape, is used.

6. Process for manufacturing a vehicle shell structure according to any one of the preceding Claims, characterised in that the synthetic material used is polyethylene, notably high-density polyethylene.

## Patentansprüche

1. Verfahren zum Herstellen eines Fahrzeugrohbaus,
**gekennzeichnet durch**
die folgenden Schritte:
Auftragen eines pulverförmigen Kunstharzmaterials an einer Innenwand einer mehrteiligen Gussform, die an den Fahrzeugrohbau angepasst ist, der mit Strukturelementen von einer Gruppe versehen ist, die aus äußeren Strukturelementen, aus inneren Strukturelementen und aus Elementen des Motorraums besteht, durch ein Ausführen eines Heiß-Schleudergussvorgangs mit dieser Gussform in einem Ofen, danach
Verringern der Temperatur der Gussform und seines Inhalts, nachfolgend
Entformen des erhaltenen multifunktionalen Rohbaus und schließlich
Übertragen des Rohbaus zu einer Anpassungsvorrichtung und
Aussetzen von zumindest einem Abschnitt dieses Rohbaus einem Blasvorgang, damit dieser die Form des entsprechenden Bereiches der Anpassungsvorrichtung annimmt.

2. Verfahren zum Herstellen eines Fahrzeugrohbaus gemäß Anspruch 1,
**dadurch gekennzeichnet, dass**
vor dem Schleudergussvorgang in der Gussform Einsatzteile zum Befestigen von mechanischen Bauteilen von einer Gruppe angeordnet werden, die aus einer Windschutzscheibe, Beleuchtungsvorrichtungen, einem Überrollbügel, Fahrgestellelemente, Motorhaubengelenke, Kabel, Leitungen, einer Hupe und Sicherheitsgurten besteht.

3. Verfahren zum Herstellen eines Fahrzeugrohbaus gemäß Anspruch 1 oder Anspruch 2,
**dadurch gekennzeichnet, dass**
zwei gegenüberliegende Gussformteile mit einem dazwischenliegenden hinreichend geringen Abstand so angeordnet werden, dass Materialbrücken zwischen den zwei entsprechenden Außenhäuten des Rohbaus ausgebildet werden, um die Steifigkeit des Rohbaus zu erhöhen.

4. Verfahren zum Herstellen eines Fahrzeugrohbaus gemäß einem der vorherigen Ansprüche,
**gekennzeichnet durch**
die folgenden Schritte:
Erzeugen eines Vorsprungs an einer Fläche des Rohbaus, wobei der Vorsprung durch eine Umfangswand mit dieser Fläche verbunden ist, und
Abschneiden der Umfangswand nach dem Abkühlen, um eine Abdeckung zu erhalten, die daran angepasst ist, dass sie an der Fläche befestigt werden kann, um so deren Öffnung zu verschließen.

5. Verfahren zum Herstellen eines Fahrzeugrohbaus gemäß einem der vorherigen Ansprüche,
**gekennzeichnet durch**
Vorsehen zumindest eines Gussformteils, von dem ein Abschnitt eine schachtartige Gestalt hat.

6. Verfahren zum Herstellen eines Fahrzeugrohbaus gemäß einem der vorherigen Ansprüche,
**gekennzeichnet durch**
Verwenden von Polyethylen, insbesondere von Polyethylen mit hoher Dichte als das Kunstharzmaterial.
